# EUROPEAN PATENT APPLICATION

(11) **EP 3 597 542 A1**
(43) Date of publication of application: **22.01.2020**
(21) Application number: 19183591.7
(22) Date of filing: 01.07.2019
(51) Int. Cl.: B64D 27/00, B64D 29/00

(54) **GAS TURBINE ENGINE MOUNT ARRANGEMENT**

(30) Priority: 18.07.2018 GB 201811728; 02.10.2018 GB 201816074
(71) Applicant: Rolls-Royce plc, London SW1E 6AT (GB)
(72) Inventor: Lim, Chia Hui, Derby, Derbyshire DE24 8BJ (GB); Stretton, Richard, Derby, Derbyshire DE24 8BJ (GB); Sheaf, Christopher, Derby, Derbyshire DE24 8BJ (GB)
(74) Representative: Rolls-Royce plc

(57) **Abstract**

A mounting arrangement for mounting an aircraft gas turbine engine to an aircraft. The mounting arrangement comprises an engine nacelle. The engine nacelle comprises a distal assembly comprising a part annular engine cowl, a gas turbine engine core housing surrounded by the engine cowl and a distal bifurcation extending between the engine core housing and engine cowl, the distal bifurcation extending in a first direction to define a first axis. The mounting arrangement further comprises a proximal assembly having a mount configured to mount the proximal assembly to the engine core housing. The proximal assembly further comprises a pylon configured to mount the proximal assembly to mounting location such as a wing of the aircraft at an engine mounting location. The pylon extends in a line between the wing and the engine core housing to define a second axis, wherein the second axis is normal to a distal surface of the wing at the engine mounting location and is non-parallel to the vertical axis.

## Description

The present disclosure concerns a mounting arrangement for a gas turbine engine.

In many aircraft, gas turbine engines are mounted below the wings in pods known as "nacelles". A coupling known as a "pylon" mounts each nacelle to the wing.

In many low wing aircraft, the wing is mounted to the fuselage such that the wing is angled relative to the ground, with the tip of the wing being higher above the ground than the wing root. Such an arrangement is known as "dihedral", and is commonly employed to provide increased aerodynamic stability in roll.

Consequently, in such cases, the engine must be mounted to a wing that is not parallel to the ground. There are two known conventional arrangements for mounting aircraft engines to wings having dihedral.

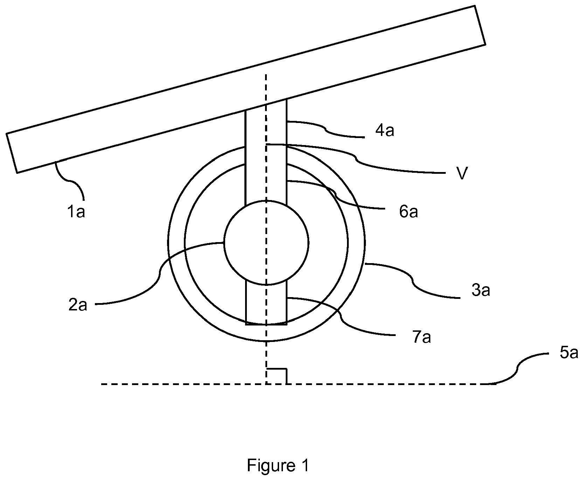

In a first example, the pylons are mounted vertically, with the engines hanging directly beneath. Figure 1 shows such an arrangement. Figure 1 shows the port wing 1a of an aircraft having an engine 2a mounted within a nacelle 3a. A pylon 4a is provided which is mounted to the wing 1a at an angle, such that the pylon 4a extends in a vertical direction, normal to the ground 5a. Proximal and distal bifurcations 6a, 7a extend from the pylon 4a to couple the engine 2a to the pylon 4a and nacelle 3a, and also extend in a vertical line. In such a case, nacelles 3a and engines 2a on the port and starboard sides of the aircraft can be identical, which reduces design and manufacturing costs.

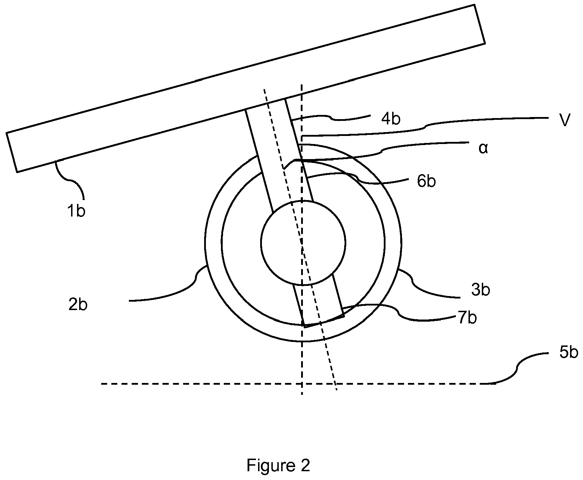

In a second example, the pylons are mounted normal to the distal wing surface, such that the top dead centre (TDC) of the engines are rolled inboard towards the fuselage to define an angle α between TDC and the vertical plane V. Such an arrangement may be referred to as a canted pylon. Such an example is shown in figure 2. In figure 2, the port wing 1b of the aircraft has the engine 2b mounted within a nacelle 3b. A pylon 4b is provided which is mounted normal to the distal surface of the wing 1b, such that the pylon 4b extends at an angle to the ground 5b. Proximal and distal bifurcations 6b, 7b again extend from the pylon 4b to couple the engine 2b to the pylon 4b and nacelle 3b, and also extend in a straight line at an angle to the ground 5b. Consequently, where identical nacelles are provided on the port and starboard sides, the location of bottom dead centre of each engine is angled relative to the vertical plane V. This can cause several problems. For instance, a single drain port cannot be provided at a single location, since the bottom of the nacelle is different for the port and starboard locations. The same is true for the design of sumps, oil level sight glasses etc. Other issues may also arise.

Engines mounted above the wing are also known (for example as used in the Honda™ HA-420 HondaJet™). Where the wings have dihedral, similar issues may arise.

According to a first aspect there is provided a mounting arrangement for mounting an aircraft gas turbine engine to an aircraft, the mounting arrangement comprising:
an engine nacelle comprising;
a distal assembly comprising a part annular engine cowl, a gas turbine engine core housing surrounded by the engine cowl, and a distal bifurcation extending between the engine core housing and engine cowl, the distal bifurcation extending in a first direction to define a first axis;
an proximal assembly having a mount configured to mount the proximal assembly to the engine core housing, the proximal assembly further comprising a pylon configured to mount the proximal assembly to the aircraft at an engine mounting location, the pylon extending in a line between the mounting location and the engine core housing to define a second axis, wherein the second axis is normal to a surface of the aircraft at the engine mounting location and is non-parallel to the first axis.

Consequently, the pylon can be mounted to extend at a right angle to the mounting location, while the distal bifurcation of the distal assembly can be mounted to extend at a right angle to the ground. Consequently, the engine can be installed within the engine nacelle with the distal bifurcation defining the engine bottom dead centre, or any other predefined axis. Consequently, the bottom dead centre of the engine is coincident for both the port and starboard engines, while having a common distal assembly for both engines.

An angle of between 1° and 30° may be defined between the second axis and the first axis.

The proximal assembly may comprise a part annular engine housing configured to abut against a part annular engine housing of the distal assembly, such that the part annular engine housings of the proximal and distal assemblies form a full annulus when assembled.

The engine may be mounted below the wing, such that the proximal assembly is mounted above the distal assembly in use.

Alternatively, the engine may be mounted above the wing, such that the proximal assembly is mounted below the distal assembly in use.

According to a second aspect of the invention there is provided an aircraft comprising a mounting arrangement in accordance with the first aspect.

The aircraft may comprise a first engine mounting arrangement mounted to a port side of the aircraft and a second engine mounting arrangement mounted to a starboard side of the aircraft.

The distal assembly of each engine mounting arrangement may be substantially identical, while the proximal assembly of the first and second engine mounting arrangements may be reflections of one another in the first axis when assembled, or may be rotated relative to one another.

The first axis may correspond to a vertical axis.

The mounting location may comprise a wing of the aircraft, and may comprise an upper or a lower surface of the wing of the aircraft.

Alternatively, the mounting location may comprise a fuselage of the aircraft, and may comprise a tail of the aircraft.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a schematic front view of a first prior engine mounting arrangement;
**Figure 2** is a schematic front view of a second prior engine mounting arrangement;
**Figure 3** is a schematic overhead view of an aircraft having an engine mounting arrangement;
**Figure 4** is a schematic front view of a first engine mounting arrangement in accordance with the present disclosure;
**Figure 5** is a schematic front view of a second engine mounting arrangement in accordance with the present disclosure;
**Figures 6a and 6b** are schematic front views of a distal assembly and an proximal assembly respectively of the engine mounting arrangement of figure 4; and
**Figures 7a and 7b** are schematic front views of a distal assembly and an proximal assembly respectively of the engine mounting arrangement of figure 5;
**Figure 8** is a schematic front view of a third engine mounting in accordance with the present disclosure; and
**Figure 9** is a schematic front view of a fourth engine mounting in accordance with the present disclosure.

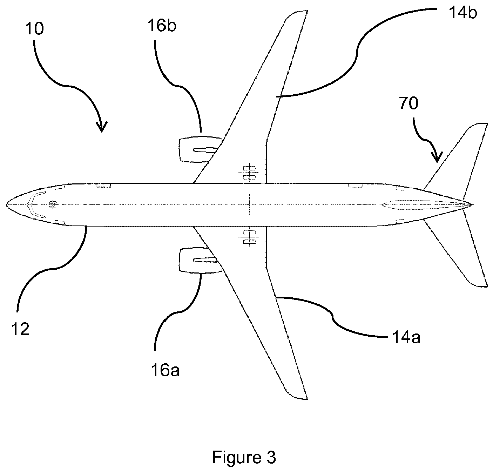

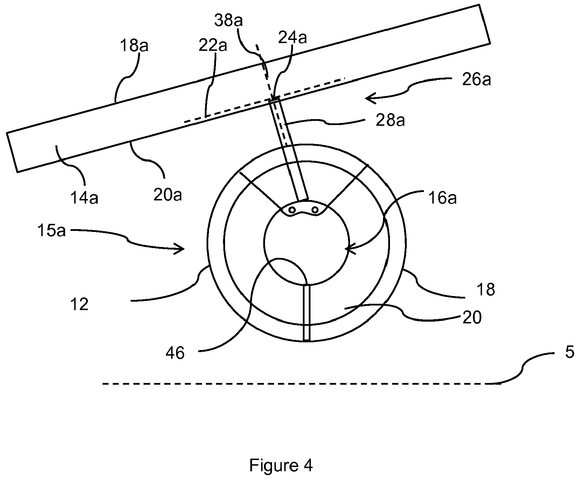

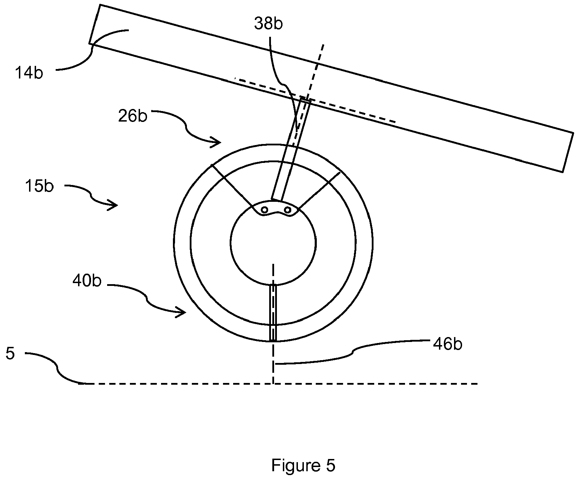

With reference to Figure 3, an aircraft 10 is shown. The aircraft 10 comprises a fuselage 12, port and starboard wings 14a, 14b and a tail 70 at an aft end. Mounted to each wing 14a, 14b is a respective engine 16a, 16b, which is mounted by a mounting arrangement shown in more detail in figure 4 and figure 5.

Figure 4 shows a front view of the port engine 16a mounted to the port wing 14a within a nacelle 15a. As can be seen, the wing 14a is canted upward along its span in a direction extending from the root to the tip. Such an arrangement is known as dihedral. The amount of dihedral shown will in general be less than that shown in figure 4, which is exaggerated to improve clarity.

The wing 14a defines upper 18a and lower 20a surfaces. The lower surface 20a defines a spanwise axis 22a which runs parallel to the lower surface 20a at an engine mounting point 24a of the wing 14a.

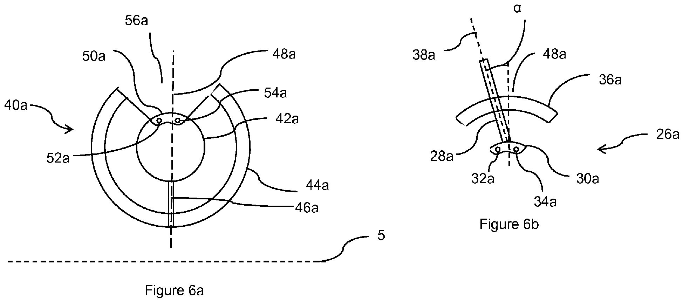

A proximal mounting assembly 26a is provided, which is shown in further detail in figure 6b. The proximal mounting assembly is mounted proximate to the wing 14a lower surface 20a and includes a pylon 28a, with an proximal end of the pylon 28a being mounted to the wing 14a at the mounting location 24a when mounted. A distal / radially inner end of the pylon 28a is coupled to a part annular coupling member 30a. The coupling member 30a comprises first and second fastener holes 32a, 34a, which are circumferentially spaced. The coupling member 30a typically comprises spherically jointed connecting links to allow for articulation to accommodate build tolerances and mechanical and thermal displacements. Typically there would be two main connection points between the pylon and the engine. A forward mount (as illustrated in figure 6b) is located ahead of the engine centre of gravity and connected to the core engine as illustrated or to the fancase. A second rear mount plane (not shown) is also typically provided, typically at the rear of the engine on the rear static structure. The inventive mount system is able to connect to the engine using conventional engine mount connections at top-dead-centre (TDC) or the 12 o'clock position.

The proximal mounting assembly 26a further comprises a part annular pylon apron 36a. The apron 36 extends from either circumferential side of the pylon 28a, and defines gas washed radially inner and outer surfaces.

Referring again to figure 4 and figure 6b, it can be seen that the pylon 28a extends between the coupling member 30a and the engine mounting point 24a of the wing 14a via the pylon apron 36a to define a second axis 38a extending between the mounting point 24a and coupling member 30a. The second axis 38a extends normal to the spanwise axis 22a, such that the pylon 28a extends normal to the wing distal surface 20a at the mounting location 24a. In this embodiment, the vertical axis defines a first axis.

A distal mounting assembly 40a is also provided, and is shown in more detail in figure 6a. As will be understood, the terms "proximal" and "distal" relate to the relative distances to the wing surface to which the engine is mounted, with "proximal" being closer to the wing than "distal". The distal mounting assembly 40a comprises an annular engine core housing 42a, which surrounds an engine core (not shown). The engine core housing 42a is surrounded by a part annular cowl 44a, which is configured to house an engine bypass fan (not shown). The engine core housing 42a is mounted to the cowl 44a by a distal bifurcation 46a. The distal bifurcation 46a extends between the engine core housing 42a and the cowl 44a to define a vertical axis 48a, which is normal to the ground surface 5 when the aircraft 10 is on the ground. Consequently, engine equipment which is provided within the engine core housing 42a can be located at a bottom dead centre defined by the distal bifurcation 46a on both the port and starboard engines, which will be explained in more detail later.

The distal mounting assembly 40a further comprises a coupling member 50a, which is provided at top dead centre of the core engine housing 42a, and has fastener apertures 52a, 54a. A part annular gap 56a is defined at top dead centre of the distal mounting assembly, by a space between ends of the cowl 44a.

Referring once more to figure 4, it can be seen how the proximal and distal mounting assemblies 26a, 40a are mounted together. The fastener apertures 30a, 32a of the proximal mounting assembly 26a and the fastener apertures 52a, 54a of the proximal mounting assembly 40a cooperate to allow fasteners such as bolts to pass through to fix the proximal and distal mounting assemblies 26a, 40a together. The pylon 28a is mounted to the wing 14a at the mounting location 24a, such that the engine 16a is mounted to the aircraft wing 14a.

As can be seen, when the proximal and distal mounting assemblies 26a, 40a are mounted together to form the nacelle 15a, the proximal mounting assembly apron 36a and cowl 44a form a continuous ring to define radially inner and outer continuous gas washed surfaces of the nacelle 15a. Further fasteners (not shown) may be provided to fasten the apron 36a to the cowl 44a at the join.

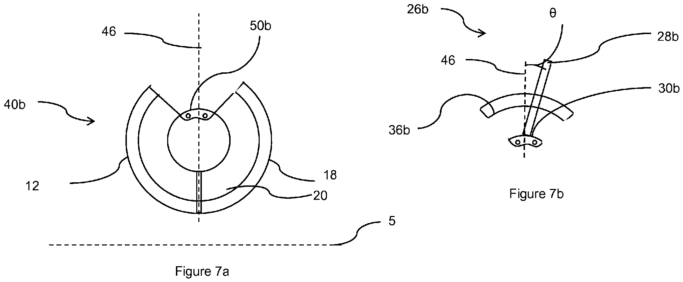

Referring now to figures 7a and 7b, there is shown the distal and proximal mounting assemblies 40a, 26b respectively for the starboard engine 14b. In figures 7a and 7b, the same references numerals are used for the same features, but appended with a "b" instead of an "a".

As can be seen from a comparison of figures 6a and 7a, the distal mounting assembly 40b is substantially identical to the distal mounting assembly 40a, i.e. the location and geometry of each component is essentially the same. Consequently, a common distal mounting assembly 40a, 40b can be manufactured for both the port and starboard engines 16a, 16b.

Referring to figure 6a and figure 6b, once installed on the wing 14a, the apron 36a would typically be fixed or immobile relative to the wing 14a and pylon 38a, whereas the outer duct walls 44a would be hinged from the fixed apron for engine maintenance access. The inner cowl doors 42a would also be hinged from the proximal structure - either pylon mounted (hinged support from structure 30a) or engine mounted (hinged support from 50a).

The engine access doors located on the core housing 42a and cowl 44a would be latched together at 6 o'clock below top dead centre. By having hinge and latch points symmetrical about the vertical centre line 48a the cowl doors will naturally hinge closed, improving the cowl latching procedure.

However, the proximal mounting assembly 26b for the starboard engine 16b differs from that of the port engine 16a. As can be seen, the proximal mounting assembly 26b is essentially a reflection of the proximal mounting assembly 26a about the vertical axis 46b. Consequently, the generally rotationally symmetric apron 36b and coupling member 50b are relatively unchanged, but the pylon 28b is provided at an angle θ which has the same magnitude but opposite sign as the angle α of the proximal mounting assembly 26a.

Figure 5 shows the proximal and distal mounting assemblies 26b, 40b mounted to form the nacelle 15b, with the nacelle 15b mounted to the starboard wing 14b. As can be seen, the distal bifurcation again extends generally perpendicular to the ground 5 when installed.

Several advantages of the described arrangement can realised. Firstly, the engines 16a, 16b are provided at the same orientation regardless of their position on the port or starboard wings. Consequently, a common distal mounting assembly can be provided, with each distal mounting assembly having components that need to be located at bottom dead centre (such as drain holes, sumps) and other equipment that has to be provided at a certain angle or height on the equipment, such as fluid sight glasses, located in a common position. Consequently, design and manufacturing costs are reduced. This in turn results in the engines of both wings having a line between their top dead centre and bottom dead centre coincident with a vertical axis when on the ground. This results in optimum installed cross-wind performance and inlet incidence performance. Furthermore, since the engine top dead centre is located at the 12 o'clock position relative to the ground, panels can be hinged to meet at a common latching point, thereby simplifying ground handling procedures. Normally need to accommodate flight envelope plus rolls allowance - deletes the roll allowance. Nacelle drainage.

Each apron can be tailored to local aerodynamic conditions for each wing, without requiring adjustments to the remainder of the engine or the nacelle, thereby resulting in further potential aerodynamic improvements.

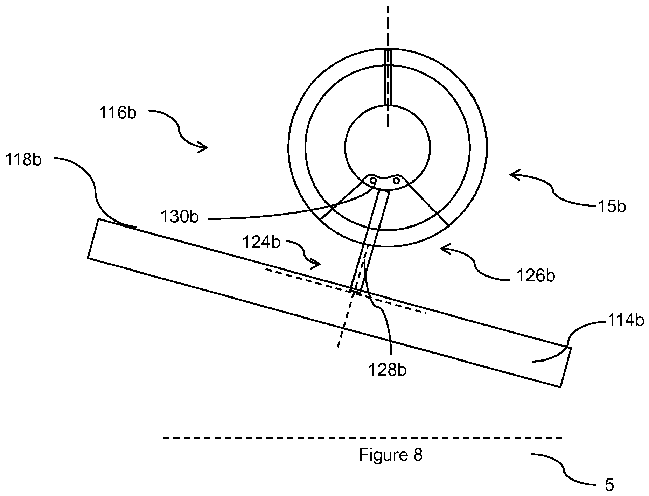

Figure 8 shows an alternative configuration for an engine installation in which a podded engine nacelle is provided above the wing.

Figure 8 shows the starboard wing 114b of an aircraft having an engine installed above the wing 114b is the same as in previous embodiments, having dihedral, but the engine installation differs.

The aircraft includes an engine 116b housed within a nacelle 115b. As can be seen, the engine is mounted at a mounting location 124 provided at an upper surface 118b of the wing 114b. A proximal mounting assembly 126b is provided. The proximal mounting assembly 126b is similar to the mounting assembly 26b, but is provided upside-down relative to the arrangement 26b. In other words, the mounting assembly 126b is mounted proximate to the wing 114b upper surface 118b and includes a pylon 128b, with a proximal end of the pylon 128b being mounted to the wing 114b at a mounting location. A distal / radially inner end of the pylon 128b is coupled to a part annular coupling member 130b, which is similar to that of the first embodiment.

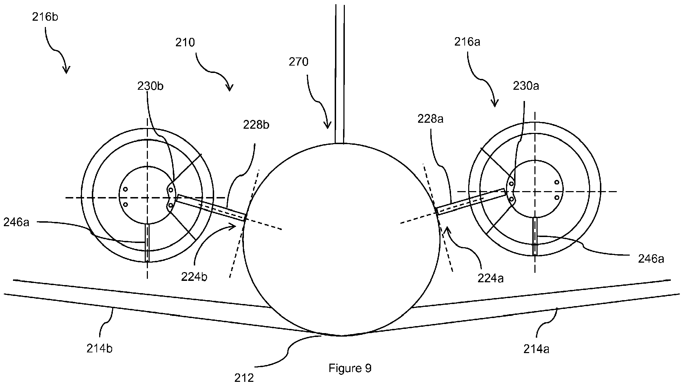

Figure 9 shows a front view of an aircraft 210 comprising a fourth engine configuration. As can be seen, the aircraft 210 again comprises a fuselage 212 and port and starboard wings 214a, 214b. Engines 216a, 216b are also provided. However, in this case, the engines 216a, 216b are mounted to sides of the fuselage 212, rather than to the wings 214a, 214b.

As can be seen, the engines 216a, 216b are mounted to respective pylons 228a, 228b. Each pylon projects from a side surface of the fuselage, but is oriented away from the horizontal plane 260 (which defines a first axis in this example) by a cant angle of approximately 10°. Each engine 216a, 216b includes a proximal mounting assembly 226a, 226b located adjacent the aircraft fuselage 212. The proximal mounting assembly 226b is similar to the mounting assembly 26b, but is oriented 90° relative to the arrangement 26b. In other words, the mounting assembly 226b is mounted proximate to the fuselage side surface, and includes a pylon 228a, 228b, with a proximal end of the pylon 228a, 228b being mounted to the fuselage 212 at a mounting location 224, which is located adjacent an aft part of the aircraft, at the tail 270. A distal end of the pylon 228a, 228b defines a bifurcation 246a, 246b, which is coupled to a part annular coupling member 230b, which is similar to that of the first embodiment. Again, the bifurcation 246a, 246b extends vertically to define a second axis, though it will be understood that the bifurcation could extend horizontally to define the second axis. The proximal end of each pylon 228a, 228b extends at an angle to the horizontal plane, while the bifurcation 246a, 246b end extends in the vertical plane 261.

Further optimisations can be realised in view of the above arrangement. In prior designs, the nacelle aerodynamic design is a compromise between the port and starboard engines, since interactions between the nacelle and the ground and between the nacelle and the wing take place on different positions on the port and starboard nacelle. For example, an ideal inlet lip design would take into account the different airflows around the lip circumference, especially at the bottom dead centre and sideline (90 degrees from TDC), and the wing at the top of the engine. In view of the port and starboard engines having the same orientation relative to the ground, and different proximal mounting assemblies, the nacelle aerodynamics can be optimised. Furthermore, the gearbox sump can be optimised to accommodate lower fluid levels, since maximum variation in orientation of the sump is reduced. Consequently, fluid quantities can be reduced, thereby further reducing weights.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

For example, the wing could have anhedral (i.e. be angled toward the ground from the root to the wingtip). The engine could be of any suitable bypass type, such as direct drive or geared.

## Claims

1. A mounting arrangement for mounting an aircraft gas turbine engine (16) to an aircraft (10), the mounting arrangement comprising:
an engine nacelle (15a) comprising;
a distal assembly (40a) comprising a part annular engine cowl (44), a gas turbine engine core housing (42) surrounded by the engine cowl (44) and a distal bifurcation (46) extending between the engine core housing (42) and engine cowl (44), the distal bifurcation (46) extending in a first direction to define a first axis (48);
a proximal assembly (26) having a mount configured to mount the proximal assembly to the engine core housing, the proximal assembly further comprising a pylon (28) configured to mount the proximal assembly (26) to the aircraft (10) at an engine mounting location (24), the pylon extending in a line between the mounting location (24) and the engine core housing (42) to define a second axis (38), wherein the second axis (38) is normal to a surface (20) of the aircraft (10) at the engine mounting location (24) and is non-parallel to the first axis (48).

2. A mounting arrangement according to claim 1, wherein an angle of between 1 ° and 30° is defined between the second axis (38) and the first axis (48).

3. A mounting arrangement according to claim 1 or claim 2, wherein the proximal assembly (26) comprises a part annular engine housing (36) configured to abut against a part annular engine housing (44) of the distal assembly (40), such that the part annular engine housings (44, 40) of the proximal and distal assemblies form a full annulus when assembled.

4. An aircraft (10) comprising a mounting arrangement in accordance with any of the preceding claims.

5. An aircraft according to claim 4, wherein the aircraft comprises a first engine mounting arrangement (16a) mounted to a port side of the aircraft (10) and a second engine mounting arrangement (16b) mounted to a starboard side of the aircraft (10).

6. An aircraft according to claim 5, wherein the distal assembly (40a, 40b) of each engine mounting arrangement (16a, 16b) is substantially identical, while the proximal assembly (26a, 26b) of the first and second engine mounting arrangements are reflections of one another in the first axis (48) when assembled.

7. An aircraft according to any of claims 4 to 6, wherein the first axis (48) corresponds to a vertical axis.

8. An aircraft according to claim 7, wherein the mounting location (26) comprises a wing (14) of the aircraft (10).

9. An aircraft according to claim 8, wherein the mounting location (124) comprises an upper surface (118) of the wing (114) of the aircraft (110).

10. An aircraft according to claim 8, wherein the mounting location (24) comprises a lower surface (20) of the wing (14) of the aircraft (10).

11. An aircraft according to any of claims 4 to 10, wherein the mounting location comprises a fuselage (212) of the aircraft (210).

12. An aircraft according to claim 11, wherein the mounting location (224) comprises a tail (270) of the aircraft (210).
